# EUROPÄISCHE PATENTSCHRIFT

(11) **EP 2 750 915 B1**
(45) Veröffentlichungstag und Bekanntmachung des Hinweises auf die Patenterteilung: **17.04.2019**
(21) Anmeldenummer: 12759007.3
(22) Anmeldetag: 28.08.2012
(51) Int. Cl.: B60K 37/06

(54) **VERFAHREN UND ANORDNUNG ZUM BEREITSTELLEN EINER GRAPHISCHEN NUTZERSCHNITTSTELLE, INSBESONDERE IN EINEM FAHRZEUG**
METHOD AND SYSTEM FOR PROVIDING A GRAPHICAL USER INTERFACE, IN PARTICULAR IN A VEHICLE
PROCÉDÉ ET SYSTÈME FOURNISSANT UNE INTERFACE UTILISATEUR GRAPHIQUE, EN PARTICULIER DANS UN VÉHICULE

(30) Priorität: 03.09.2011 DE 102011112447
(43) Veröffentlichungstag der Anmeldung: 09.07.2014
(73) Patentinhaber: Volkswagen Aktiengesellschaft, 38440 Wolfsburg (DE)
(72) Erfinder: CARLS, Carl, Aron, 24790 Haßmmoor (DE); WITTKÄMPER, Michael, 38102 Braunschweig (DE); MISCHKE, Michael, 30167 Hannover (DE); JOACHIM, Manuel, 38110 Braunschweig (DE)
(86) Internationale Anmeldenummer: PCT/EP2012/003601
(87) Internationale Veröffentlichungsnummer: WO 2013/029772

(56) Entgegenhaltungen:
- EP-A1- 2 018 992
- DE-A1-102009 046 376
- DE-A1-102009 059 867

## Beschreibung

Die vorliegende Erfindung betrifft ein Verfahren und eine Anordnung zum Bereitstellen einer Nutzerschnittstelle, insbesondere in einem Fahrzeug. Bei dem erfindungsgemäßen Verfahren wird zumindest ein zur Interaktion vorgesehenes graphisches Objekt in einem Anzeigebereich dargestellt, es wird eine Geste eines Nutzers erfasst. Des Weiteren wird das graphische Objekt zur Interaktion ausgewählt und es wird eine der Geste zugeordnete Interaktion mit dem ausgewählten graphischen Objekt durchgeführt.

Graphische Nutzerschnittstellen sind insbesondere bei Computern und bei Bediensystemen von elektronischen Einrichtungen bekannt, bei denen sie dem Benutzer die Interaktion mit der Maschine über grafische Symbole, auch als Objekte bezeichnet, erlaubt. Diese Objekte können dabei auf vielfältige Weise gesteuert werden. Sie können beispielsweise mittels einer elektronischen Maus, über eine berührungsempfindliche Anzeigefläche oder über Gesten, die vor oder auf der Anzeigefläche erfasst und in Steuersignale umgewandelt werden, ausgewählt oder verschoben werden. Ferner kann über ein ausgewähltes Objekt auch eine dem Objekt zugeordnete Funktion zum Steuern eines Geräts ausgeführt werden.

Aufgrund der Zunahme elektronischer Einrichtungen in Fahrzeugen ist man inzwischen dazu übergegangen, auch Fahrzeuge mit einem Bediensystem auszustatten, das über eine graphische Nutzerschnittstelle verfügt, um die diversen Einrichtungen des Fahrzeugs, beispielsweise Radio, CD-Spieler, Kommunikationseinrichtung oder Navigationssystem, mittels weniger Bedienelemente steuern zu können.

Bedienkonzepte mit einer graphischen Benutzerschnittstelle in Fahrzeugen können dabei auf großen, freiprogrammierbaren Anzeigeflächen realisiert werden, bei denen Objekte an beliebiger Stelle darstellbar sind und von einem Fahrzeuginsassen auswählbar oder verschiebbar sein können. Dabei sind jedoch mehrere Besonderheiten beim Einsatz solcher Bedienkonzepte in einem Fahrzeug zu berücksichtigen. Zum einen muss gewährleistet sein, dass der Fahrer bei der Benutzung der graphischen Nutzerschnittstelle nicht vom Führen des Fahrzeugs und der Beobachtung des Straßenverkehrs abgelenkt wird. Die Bedienaktionen zum Bedienen der Objekte müssen schnell und intuitiv durchgeführt werden können. Außerdem ist die Mobilitätseinschränkung der Fahrzeuginsassen zu beachten, die insbesondere durch eine Gurtpflicht weitgehend an die jeweiligen Sitzpositionen gebunden sind.
Ein Problem dabei ist, dass es bei großen Anzeigeflächen, die sich über die gesamte Breite des Fahrzeugs erstrecken, wegen der Mobilitätseinschränkung der Fahrzeuginsassen vorkommen kann, dass frei platzierbare Objekte außerhalb der Reichweite eines Benutzers liegen. Beispielsweise hat der Beifahrer ein Objekt nach rechts verschoben, damit er es bequem mit seiner rechten Hand erreichen kann. Ein solches Objekt ist nun unter Umständen für den Fahrer nicht oder nur noch schwer erreichbar.

In der DE 10 2009 048 834 A1 ist ein Verfahren und eine Vorrichtung zum Anzeigen von Informationen beschrieben, bei dem graphische Objekte auf einer Anzeigefläche bedient werden können, ohne dass der Nutzer die Anzeigefläche berühren muss. Dazu werden die Position und die Bewegung z.B. der Hand des Nutzers in einem Aufenthaltsbereich vor der Anzeigefläche erfasst und verschiedenen Gesten zugeordnet.

In der DE 10 2009 032 069 A1 wird ein Verfahren und eine Vorrichtung zum Bereitstellen einer Benutzerschnittstelle in einem Fahrzeug beschrieben, bei dem Gesten berührungslos in einem Erfassungsraum vor der Anzeigefläche erfasst werden. Dabei kann die Bewegungsrichtung der Geste ausgewertet werden und ein Bedienobjekt mit einem Bewegungselement, z.B. einem virtuellen Schiebe- oder Drehschalter, bedient werden.

Die US 2011/0022307 A1 beschreibt ein Verfahren zum Bedienen eines Navigationsprogramms, welches auf einem Touchscreen angezeigt wird. Bei der Annäherung eines Objektes an die berührungsempfindliche Oberfläche kann dabei die Empfindlichkeit zum Erfassen des Objekts erhöht werden, sodass der Nutzer den Touchscreen nicht mehr direkt berühren muss. Die Erfassung erfolgt z.B. kapazitiv über mehrere Messpunkte auf dem Touchscreen.

In der US 2011/0050589 A1 wird ein Verfahren zum Bedienen mittels Gesten für ein Fahrzeug beschrieben. Dabei werden Handgesten auf einer beliebigen vorbestimmten Oberfläche im Fahrzeug erfasst und ausgewertet. Beispielsweise kann der Fahrer des Fahrzeugs alphanumerische Zeichen auf das Lenkrad schreiben.

In der DE 10 2009 059 867 A1 ist ein Verfahren und eine Vorrichtung zum Bereitstellen einer graphischen Benutzerschnittstelle beschrieben, bei welchem graphische Objekte auf einer Anzeigefläche angezeigt werden und eine Geste auf oder vor einer Anzeigefläche erfasst wird. Dadurch wird wenigstens eine Teilmenge der angezeigten Objekte in die Nähe der Position verschoben, bei der die Geste ausgeführt wurde. Insbesondere können auf diese Weise Objekte, die außerhalb der Reichweite des Benutzers positioniert waren, zum Ort der Geste verschoben werden.

Das Dokument EP 2 018 992 A1 offenbart die Oberbegriffe der Ansprüche 1 und 9.

Es ist die Aufgabe der vorliegenden Erfindung ein Verfahren und eine Anordnung zum Bereitstellen einer grafischen Nutzerschnittstelle der eingangs erwähnten Art anzugeben, die ein einfaches und intuitives Bedienen ermöglichen und insbesondere für den Einsatz in einem Fahrzeug geeignet sind.

Diese Aufgabe wird erfindungsgemäß durch ein Verfahren mit den Merkmalen des Anspruchs 1 sowie durch eine Anordnung mit den Merkmalen des Anspruchs 9 gelöst. Vorteilhafte Aus- und Weiterbildungen ergeben sich aus den abhängigen Ansprüchen.

Bei dem erfindungsgemäßen Verfahren zum Bereitstellen einer Nutzerschnittstelle wird das zumindest eine zur Interaktion vorgesehene graphische Objekt in einem Anzeigebereich außerhalb der Reichweite des Nutzers dargestellt und die Geste des Nutzers wird in einem von dem Anzeigebereich räumlich getrennten Detektionsraum erfasst. Dabei liegt/liegen die Position oder Positionen, die das ausgewählte graphische Objekt während der Interaktion einnimmt, außerhalb der Reichweite des Nutzers, wobei eine erste Phase der Geste auf einer berührungsempfindlichen Oberfläche in Reichweite des Nutzers erfasst wird und eine zweite Phase der Geste berührungslos im Raum erfasst wird, und wobei die Trajektorien der ersten und zweiten Phase der Geste miteinander verbunden sind. Hierdurch lassen sich auch entfernte Objekte auf dem Anzeigebereich in einfacher Weise bedienen, ohne diese in die Nähe des Nutzers verschieben zu müssen. Dabei ist die Position des zur Interaktion vorgesehenen Objekts insbesondere unabhängig von dem Bereich, in welchem die Geste erfasst wurde. Der Detektionsraum muss damit nicht mehr unmittelbar vor dem Anzeigebereich ausgebildet sein. Er ist insbesondere beabstandet von dem Anzeigebereich.

Unter einer "Geste" wird im Sinne der Erfindung eine bestimmte Stellung der Hand eines Nutzers oder eine bestimmte Bewegung, die mit der Hand des Nutzers ausgeführt wird, verstanden. Die Gesten können nach an sich bekannter Art ausgestaltet sein. Sie umfassen insbesondere Zeigegesten, Wischgesten und solche Gesten, die im alltäglichen Gebrauch verwendet werden, z.B. Handdrehungen, Greifgesten und Kombinationen mehrerer solcher ggf. unmittelbar kurz nacheinander ausgeführter Gesten. Die Gesten werden im Detektionsraum ausgeführt, ohne dass der Nutzer einen räumlichen Bezug zum Anzeigebereich herstellen muss. Es ist insbesondere nicht erforderlich, sich einem bestimmten graphischen Objekt im Anzeigebereich zu nähern. Durch die Steuerung der Nutzerschnittstelle mittels Gesten wird dem Nutzer eine besonders einfache und intuitive Eingabemöglichkeit zur Steuerung des Anzeigeinhalts im Anzeigebereich oder von den dazugehörigen Einrichtungen bereitgestellt.

Unter dem Begriff "Reichweite des Nutzers" wird im Sinne der Erfindung die Greifreichweite des Nutzers verstanden, ohne dass er sich dabei strecken oder verrenken muss. Für die Anwendung im Fahrzeug muss der Nutzer dabei insbesondere nicht seine Sitzposition verlassen. Als Fahrer muss er beispielsweise seine Rumpfhaltung dazu nicht verändern und kann die Geste z.B. mit angelegtem Oberarm allein aus dem Unterarm ausführen. Die "Reichweite des Nutzers" ist ggf. situationsspezifisch veränderbar. So kann die Reichweite in bestimmten Situationen, z.B. bei einer Kurvenfahrt mit höherer Geschwindigkeit des Fahrzeugs, herabgesetzt sein, weil der Nutzer in seiner Bewegungsfreiheit durch den vorgestrafften Gurt weiter eingeschränkt ist.

Das graphische Objekt kann auf beliebige Art und Weise ausgewählt werden. Es kann insbesondere auch unabhängig von der erfassten Geste ausgewählt werden. Es wird beispielsweise durch den jeweiligen Anzeigekontext systemseitig ausgewählt. Alternativ kann das Objekt jedoch auch durch die Geste ausgewählt werden. In einer Ausgestaltung des erfindungsgemäßen Verfahrens wird ein Auswahlzeiger in dem Anzeigebereich angezeigt und es wird aus der Geste eine relative Bewegung extrahiert. Die Position des Auswahlzeigers in dem Anzeigebereich wird in Abhängigkeit von der extrahierten relativen Bewegung der Geste verändert und das graphische Objekt wird in Abhängigkeit von der Position des Auswahlzeigers ausgewählt. Hierdurch kann beispielsweise ein Cursor oder ein Mauszeiger von der Ferne aus intuitiv gesteuert werden, wobei diese Steuerung nur von der Relativbewegung der Geste im Raum abhängt.

Gemäß einer weiteren Ausgestaltung wird aus der erfassten Geste eine Richtung im Raum ermittelt, in Abhängigkeit von der ermittelten Richtung wird ein Punkt in dem Anzeigebereich berechnet und die Auswahl des graphischen Objekts wird visualisiert, wenn das graphische Objekt in einem vorbestimmten Umgebungsbereich um den berechneten Punkt liegt. Hierdurch kann das graphische Objekt durch Zeigen ausgewählt werden. Die Visualisierung des anvisierten graphischen Objekts hat den Vorteil, dass der Nutzer unmittelbar eine Rückkopplung zu seiner Bedienaktion erhält. Dabei kann der Punkt im Anzeigebereich auch dann visualisiert werden, wenn noch kein Objekt in dem Umgebungsbereich um den Punkt identifiziert wurde. Dies vermeidet, dass der Nutzer zwischen den Objekten im Leeren suchen muss, bis er das gewünschte graphische Objekt getroffen hat. Dies kann das Auswahlverfahren weiter beschleunigen.

In einer Ausgestaltung des erfindungsgemäßen Verfahrens ist vorgesehen, dass am ausgewählten Objekt die möglichen Interaktionskategorien visualisiert werden, bevor die Interaktion durchgeführt wird. Dadurch hat der Nutzer die Möglichkeit, seine Geste während des Bedienvorgangs anzupassen.

Insbesondere werden die Gesten berührungslos im Raum erfasst. Für den Fall, dass die Geste in mehrere Phasen unterteilt ist, wird wenigstens eine Phase berührungslos im Raum erfasst. Berührungslose Gesten haben insbesondere den Vorteil, dass der Nutzer für seine Bedieneingaben keine Bedienmittel in die Hand nehmen muss. Dies ist insbesondere vorteilhaft bei der Verwendung des erfindungsgemäßen Verfahrens in einem Fahrzeug.

In einer Ausgestaltung des erfindungsgemäßen Verfahrens ist vorgesehen, dass eine erste Phase der Geste auf einer berührungsempfindlichen Oberfläche in Reichweite des Nutzers erfasst wird und eine zweite Phase der Geste berührungslos im Raum erfasst wird, wobei die Trajektorien der ersten und zweiten Phase der Geste miteinander verbunden sind. Der Nutzer kann somit in einem Bedienzug eine Freihandgeste im Raum ausführen, wobei durch den Beginn der Geste auf einer Oberfläche in seiner Reichweite dem Nutzer die Orientierung erleichtert wird und die Geste ggf. besser einer Interaktion zugeordnet werden kann. Dabei wird bei einer Ausgestaltung des Verfahrens in der ersten Phase der Geste eine Berührzone in Abhängigkeit von der Geste auf der berührungsempfindlichen Oberfläche ermittelt und die Auswahl des Objekts erfolgt in Abhängigkeit von der ermittelten Berührzone auf der berührungsempfindlichen Oberfläche. Dies ermöglicht es dem Nutzer mit einer Geste ein graphisches Objekt in einer ersten Phase auf der berührungsempfindlichen Oberfläche auszuwählen und in einer zweiten Phase als Freihandgeste die Art der Interaktion mit dem graphischen Objekt festzulegen.

Die berührungsempfindliche Oberfläche umfasst insbesondere eine beliebige vom Anzeigebereich beabstandete Oberfläche in der Reichweite des Nutzers. Beim Einsatz des erfindungsgemäßen Verfahrens in einem Fahrzeug umfasst sie insbesondere eine Oberfläche in Reichweite des Fahrers des Fahrzeugs. Sie ist vorzugsweise auf dem Lenkrad ausgebildet. Dies stellt dem Fahrer des Fahrzeugs eine Unterstützung für eine besonders zielsichere Bedienung bereit, ohne dabei eine Hand vom Lenkrad entfernen zu müssen.

In einer weiteren Ausgestaltung des erfindungsgemäßen Verfahrens wird nun die Position des ausgewählten graphischen Objekts im Anzeigebereich in Abhängigkeit von der relativen Bewegung der Geste verändert. Auf diese Weise kann der Nutzer ein auf beliebige Art ausgewähltes, entferntes graphisches Objekt verschieben.

Der Anzeigebereich kann in beliebiger Weise ausgebildet sein. Es kann sich um einen großen, zusammenhängenden Anzeigebereich handeln, von dem ein Teil außerhalb der Reichweite des Nutzers befindet. In einer Ausgestaltung der Erfindung ist jedoch vorgesehen, dass der Anzeigebereich wenigstens eine erste und eine zweite Anzeigefläche umfasst, die räumlich voneinander getrennt sind, und dass durch die Geste das ausgewählte graphische Objekt von der ersten Anzeigefläche auf die zweite Anzeigefläche verschoben wird. Hierdurch können Objekte auf Anzeigeflächen verteilt werden, die bestimmten Nutzern bzw. Nutzergruppen oder Funktionsblöcken zugeordnet sind. Dies ermöglicht z.B. eine einfache und intuitive Verknüpfung zweier graphischer Objekte.

In einer Weiterbildung des erfindungsgemäßen Verfahrens ist die erste und/oder zweite Anzeigefläche auf einem lösbar mit dem Fahrzeug verbundenen Gerät angeordnet, insbesondere auf einem tragbaren, von einem Fahrzeuginsassen mitgebrachtem Gerät. Hierdurch lassen sich graphische Objekte intuitiv auf beliebige Anzeigeflächen im Fahrzeug verschieben. Dabei dient das Fahrzeug dem Zweck, einen definierten Detektionsraum zur Verfügung zu stellen, in dem die Gesten erfasst und diese ggf. den einzelnen graphischen Objekten zugeordnet werden. Die Übertragung der zu den graphischen Objekten gehörigen Daten kann dann nach an sich bekannter Art erfolgen. Die Daten werden z.B. über eine Nahfeldfunkschnittstelle, z.B. Bluetooth, zwischen den verschiedenen Geräten übertragen.

Die erfindungsgemäße Anordnung zum Bereistellen einer Nutzerschnittstelle wird von dem Gegenstand des Anspruchs 9 definiert.

Erfassung der Gesten erfolgt vorzugsweise berührungslos durch ein Kamerasystem, welches zeitlich aufgelöste Videodaten aus dem Detektionsraum aufnimmt und mittels einer angeschlossenen Analyseeinheit die erfassten Nutzerbewegungen bestimmten Gesten zuordnet. Alternativ oder auch zusätzlich umfasst die Gestenerfassungseinrichtung resistive und/oder kapazitive Flächen, über welche eine erste Phase einer Geste erfassbar ist.

Erfindungsgemäß ist des Weiteren ein Fahrzeug mit einer solchen Vorrichtung zum Bereitstellen einer Nutzerschnittstelle ausgestattet.

Die Erfindung wird nun anhand von Ausführungsbeispielen mit Bezug zu den Figuren näher erläutert.
- Figur 1: zeigt die Fahrgastzelle eines Fahrzeugs, in dem eine Anordnung zum Bereitstellen einer Nutzerschnittstelle gemäß einem Ausführungsbeispiel der Erfindung angeordnet ist,
- Figur 2: zeigt schematisch den Aufbau eines Ausführungsbeispiels einer erfindungsgemäßen Anordnung zum Bereitstellen einer Nutzerschnittstelle,
- die Figuren 3A - 3D: zeigen schematisch Gesten zur Interaktion mit graphischen Objekten, wie sie gemäß einem Ausführungsbeispiel des erfindungsgemäßen Verfahrens zum Bereitstellen einer Nutzerschnittstelle in einem Detektionsraum erfasst werden, und
- die Figuren 4A - 4D: zeigen schematisch Interaktionen mit graphischen Objekten auf einer Anzeigefläche, die gemäß den in den Figuren 3A - 3D gezeigten Gesten bedient wurden.

Die erfindungsgemäße Anordnung und das erfindungsgemäße Verfahren werden im Folgenden anhand eines Ausführungsbeispiels für eine Nutzerschnittstelle in einem Fahrzeug erläutert. Es wird jedoch darauf hingewiesen, dass die Nutzerschnittstelle in gleicher Weise auch für andere Einrichtungen zum Bedienen graphischer Objekte und dazugehöriger Funktionen eingesetzt werden kann. Das erfindungsgemäße Verfahren eignet sich insbesondere für großformatige Anzeigeflächen, bei denen bauartbedingt und/oder bedingt durch die vorherrschende Bediensituation angezeigte graphische Objekte teilweise außerhalb der Reichweite eines vor ihr platzierten Nutzers liegt. Die Erfindung lässt sich insbesondere auch bei großen interaktiven Bedientafeln einsetzen, z.B. an Informationsständen oder in Konferenzräumen.

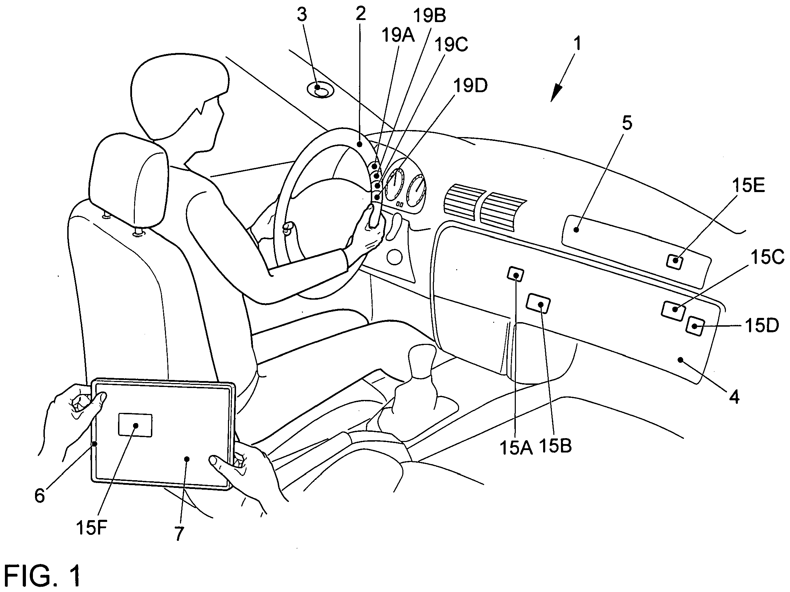

In der Figur 1 ist die Fahrgastzelle eines Fahrzeugs 1 dargestellt, in dem eine Anordnung zum Bereitstellen einer Nutzerschnittstelle gemäß einem Ausführungsbeispiel der Erfindung angeordnet ist. Im Cockpit ist auf der Fahrerseite das Lenkrad 2 und von der Mittelkonsole bis zur Beifahrerseite ein großflächiges Multifunktionsdisplay 4 angeordnet. Ferner sind im Fahrzeug weitere Anzeigeflächen in der Fahrgastzelle fest installiert bzw. für das Anzeige- und Bedienkonzept einbindbar, z.B. das vor dem Beifahrersitz angeordnete Zusatzdisplay 5 sowie das Display 7 eines tragbaren, von einem Fahrgast mitgebrachten Infotainmentgeräts 6. Das Infotainmentgerät 6 ist beispielsweise ein tragbares Medienwiedergabegerät oder ein Laptop Computer, insbesondere ein Computer mit einer ganzflächig ausgebildeten, berührungsempfindlichen Bedienoberfläche, die auch als sogenannte "Tablet-PC" bekannt sind.

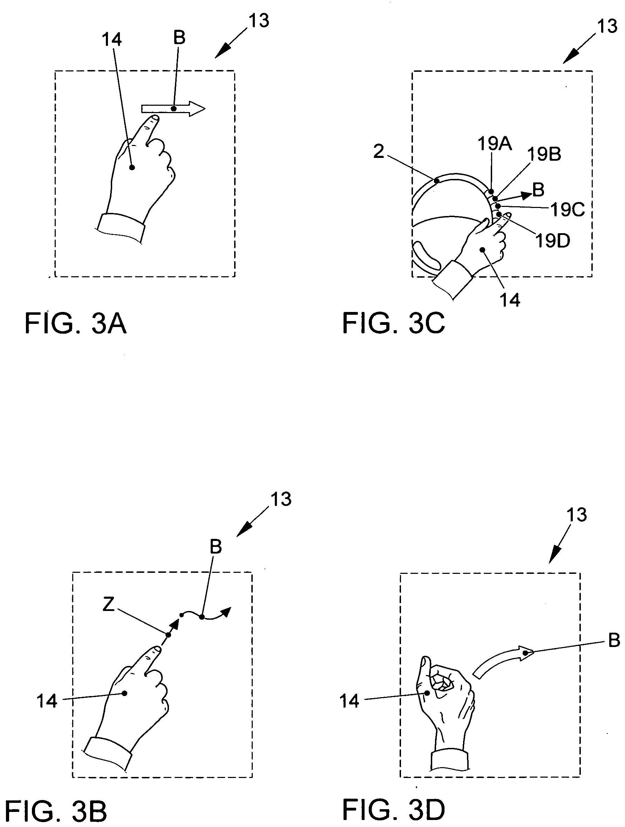

Das Multifunktionsdisplay 4, das Zusatzdisplay 5 und das Display 7 des tragbaren Infotainmentgeräts 6 verfügen über eine freiprogrammierbare Anzeigefläche, bei der sich von Programmen erzeugte Anzeigeinhalte an einer beliebigen Position des Displays darstellen lassen. Für das Anzeige- und Bedienkonzept der erfindungsgemäßen Nutzerschnittstelle bildet diese Summe der Anzeigeflächen einen gemeinsamen Anzeigebereich. Auf diese Weise lassen sich dort graphische Objekte 15A - 15F darstellen, auswählen, verschieben und bedienen, wie dies im Zusammenhang mit dem erfindungsgemäßen Verfahren mit Bezug zu den Figuren 3A - 4D noch näher erläutert wird.

Zu diesem Zweck sind im Fahrzeug 1 ein oder mehrere an sich bekannte Kameras 3 installiert, über die Gesten zum Bedienen der graphischen Objekte 15A - 15F erfasst werden können. Die Kameras 3 sind z.B. an erhöhter Position neben der Windschutzscheibe oder im Dachhimmel positioniert, sodass die jeweiligen Räume, die in Griffreichweite der im Fahrzeug 1 angegurtet sitzenden Fahrzeuginsassen liegen, jederzeit gut überwacht werden können.

Auf dem Lenkrad 2 ist eine berührungsempfindliche Oberfläche vorgesehen, die in verschiedene Zonen 19A - 19D eingeteilt ist. Diese Zonen sind vorteilhafterweise am Lenkradkranz oder am Pralltopf des Lenkrads 2 ausgebildet. Alternativ oder auch zusätzlich können weitere berührungsempfindliche Flächen in Griffreichweite wenigstens einer der Fahrzeuginsassen ausgebildet sein (nicht dargestellt). Diese berührungsempfindlichen Oberflächen bilden zusammen mit dem von der oder den Kameras 3 erfassten Raum einen Detektionsraum 13, dessen Verwendung weiter unter noch näher beschrieben wird.

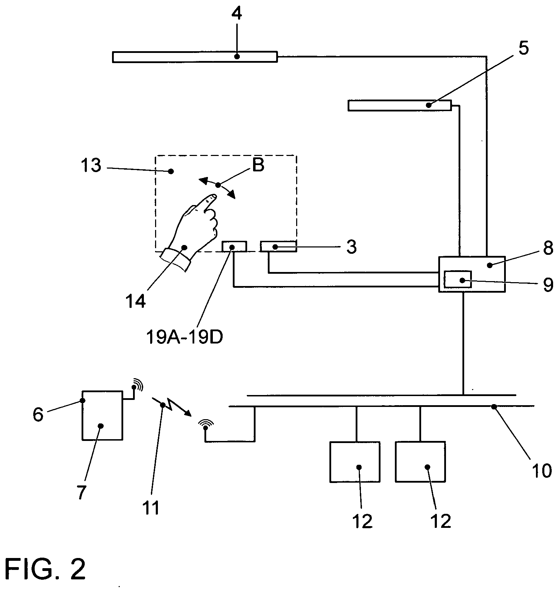

In der Figur 2 ist schematisch der Aufbau des mit Bezug zu der Figur 1 beschriebenen erfindungsgemäßen Anordnung zum Bereitstellen einer Nutzerschnittstelle dargestellt. Die fest im Fahrzeug 1 installierten, beabstandeten Displays 4, 5 sind derart im Cockpit des Fahrzeugs 1 angeordnet, dass sie einen Anzeigebereich bilden, der außerhalb der Griffreichweite der Fahrzeuginsassen liegt.

Die Kamera 3 überwacht einen Detektionsraum 13, in dem die Bewegungen der Fahrzeuginsassen überwacht werden können. Insbesondere können aus Bewegungen B einer Hand 14 eines der Fahrzeuginsassen Gesten im Detektionsraum 13 erfasst werden. Der Detektionsraum 13 ist dabei so angeordnet, dass der Anzeigebereich, in dem ein zur Interaktion vorgesehenes Objekt 15A - 15F dargestellt wird, außerhalb des Detektionsraums 13 angeordnet ist. Der Detektionsraum 13 ist bei dem vorliegenden Ausführungsbeispiel beabstandet von den Displays 4 und 5.

Die Berührzonen 19A - 19D der berührungsempfindlichen Oberflächen auf dem Lenkrad 2 liegen im Detektionsraum 13, sodass auch Gesten in wenigstens zwei Phasen erfasst werden können. Eine erste Phase der Geste kann auf einer der Berührzonen 19A - 19D begonnen werden und nahtlos in eine zweite Phase der Geste berührungslos im Raum fortgesetzt werden. Die zwei Phasen der Geste können dabei lückenlos als eine Geste erfasst werden.

Die Displays 4, 5 sowie die Kamera 3 und die Berührzonen 19A - 19D der auf dem Lenkrad 2 ausgebildeten berührungsempfindlichen Oberflächen sind mit einer Steuereinheit 8-verbunden. Die Steuereinheit 8 kann dabei die erfassten Signale aus dem Detektionsraum 13 empfangen und mittels einer Auswerteeinheit 9 bestimmten Gesten zuordnen.

Die Steuereinheit 8 ist des Weiteren über den Datenbus 10 im Fahrzeug 1 mit einer Funkschnittstelle 11 verbunden, über die das tragbare, mitgebrachte Infotainmentgerät 6 datentechnisch verbindbar ist. Es kann sich um eine beliebige Funkschnittstelle zum Datenaustausch über kurze Strecken handeln. Es ist beispielsweise eine Bluetooth, WLAN (Wireless Local Area Network) oder eine Infrarotschnittstelle. Über den Datenbus 10 kann die Steuereinheit 8 ferner Daten zu graphischen Objekten 15A - 15F empfangen, die datentechnisch in verschiedenen Funktionseinrichtungen 12 im Fahrzeug 1 gespeichert sind. Bei den Funktionseinrichtungen 12 handelt es sich insbesondere um ein Infotainmentsystem, ein Fahrerassistenzsystem, ein Kommunikationssystem und Komforteinrichtungen des Fahrzeugs 1, z.B. die Klimatisierungsanlage.

In Abhängigkeit von den zugeordneten Gesten kann die Steuereinheit 8 erfindungsgemäß die Anzeigeinhalte im Anzeigebereich, der durch die Displays 4, 5, 7 gebildet wird, steuern und Funktionen der Funktionseinrichten 12 auslösen, wie dies nun im Zusammenhang mit dem Ausführungsbeispiel des erfindungsgemäßen Verfahrens näher erläutert wird. Dazu kann insbesondere die mit Bezug zu den Figuren 1 und 2 beschriebene erfindungsgemäße Anordnung verwendet werden.

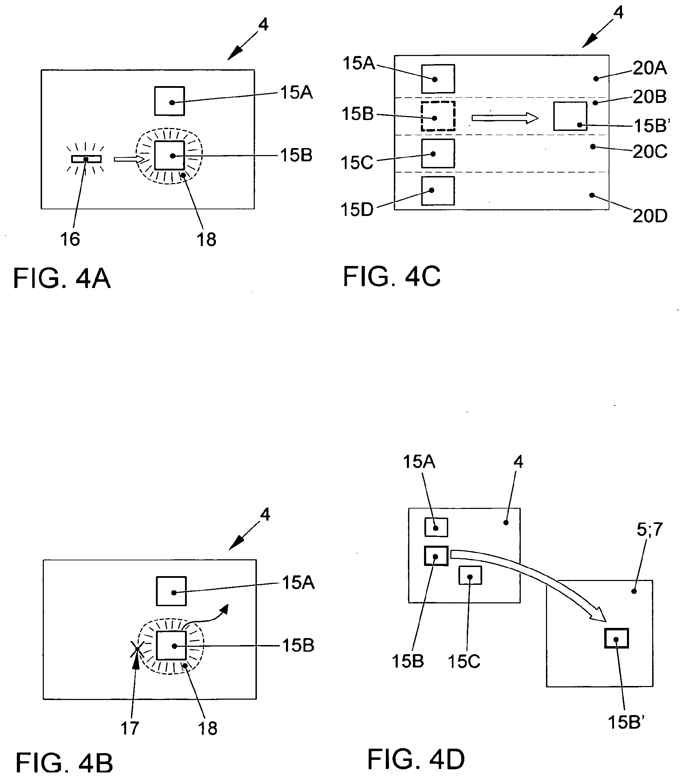

In den Figuren 3A - 3D sind schematisch Gesten zur Interaktion mit graphischen Objekten 15A - 15F dargestellt, wie sie gemäß einem Ausführungsbeispiel des erfindungsgemäßen Verfahrens zum Bereitstellen einer Nutzerschnittstelle in einem Detektionsraum 13 erfasst wurden. In den Figuren 4A - 4D sind schematisch die Interaktionen mit den graphischen Objekten 15A - 15F auf den Displays 4, 5, 7 dargestellt, die gemäß den in den Figuren 3A - 3D gezeigten Gesten bedient wurden.

Als Ausgangssituation werden auf dem durch die Displays 4, 5, 7 gebildeten Anzeigebereich verschiedene graphische Objekte 15A - 15F dargestellt. Der Anzeigebereich liegt außerhalb der Griffreichweite der einzelnen Fahrzeuginsassen, wenn diese auf den Sitzen angegurtet sind. Ferner sind weitere Teile des Anzeigebereichs von keinem der Fahrzeuginsassen derart komfortabel erreichbar, dass eine durchgängige Bedienung durch z.B. eine Touchscreen-Bedienung möglich wäre. Der Detektionsraum ist beabstandet von diesen Anzeigebereichen.

In der Figur 3A wird im Detektionsraum 13 eine Bewegung B der Hand 14 des Nutzers durch die Kamera 3 erfasst. Die Bewegung B wird in der Auswerteeinheit 9 einer Geste zugeordnet, wobei der Geste wiederum eine spezifische Interaktion zugeordnet ist. Im gezeigten Fall führt der Nutzer mit seinem Zeigefinger eine Wischgeste von links nach rechts aus. Alternativ dazu hätte er z.B. auch zwei Finger oder die ganze, geöffnete Hand nehmen können. Aus der Geste wird eine relative Bewegung B von links nach rechts extrahiert.

Weil zu diesem Zeitpunkt noch keines der angezeigten graphischen Objekte 15A, 15B ausgewählt wurde, wird der auf dem Display 4 dargestellte Cursor 16 gesteuert, bis dieser von links nach rechts in einen Umgebungsbereich 18 um das graphische Objekt 15B verschoben wurde (siehe Figur 4A). Auf diese Art und Weise kann der Nutzer das Objekt 15B auswählen. Er führt die Bewegung B in eine beliebige Richtung fort, um das nun ausgewählte graphische Objekt 15B in Abhängigkeit von der fortgesetzten Bewegung zu verschieben. Der Nutzer verschiebt das graphische Objekt 15B innerhalb eines Teils des Anzeigebereichs außerhalb seiner Griffreichweite. Er verschiebt das graphische Objekt 15B z.B. weiter nach rechts, wobei die relative Bewegung B, mit der das graphische Objekt 15B verschoben wird, wiederum aus der fortgesetzten Bewegung B ermittelt wird.

In der Figur 3B wird im Detektionsraum 13 eine Zeigegeste der Hand 14 des Nutzers durch die Kamera 3 erfasst. Aus der erfassten Zeigegeste wird die Zeigerichtung Z ermittelt und es wird mittels der Auswerteeinheit 9 eine Verlängerung von der Hand 14 in Richtung des Anzeigebereichs berechnet, bis die Verlängerung den Anzeigebereich schneidet. Die Steuereinheit 8 erzeugt daraufhin ein Steuersignal an das Display 4, sodass an dem berechneten Schnittpunkt ein Zeigepunkt 17 auf dem Display 4 angezeigt wird (siehe Figur 4B). Liegt der Zeigepunkt 17 in dem Umgebungsbereich 18 um das graphische Objekt 15B, so wird dieses visuell hervorgehoben und ausgewählt. Durch die Anzeige des Zeigepunktes 17 hat der Nutzer die Möglichkeit, die Zeigerichtung zu korrigieren, sodass er auch weiter entfernte graphische Objekte mühelos auswählen kann.

Wenn das graphische Objekt 15B ausgewählt wurde, kann der Nutzer nun die Geste in eine Wisch- oder Ziehgeste verändern, sodass wie oben beschrieben aus der Geste eine Bewegungsrichtung B extrahiert werden kann, in Abhängigkeit derer das graphische Objekt 15B verschoben wird. Alternativ kann der Nutzer die Zeigegeste auch in eine andere Geste überführen, z.B. eine Schnips- oder Schnalzgeste, mit welcher eine dem graphischen Objekt 15B zugeordnete Funktion ausgeführt wird.

In den beiden oben genannten Fällen wurde das graphische Objekt 15B jeweils in einer zweiphasigen Geste zunächst in der ersten Phase der Geste ausgewählt und es wurde dann in der zweiten Phase der Geste eine Interaktion mit dem graphischen Objekt 15B durchgeführt. Alternativ kann das graphische Objekt 15B bereits vorher durch eine andere Nutzeraktion oder systemseitig ausgewählt worden sein. Das graphische Objekt 15B ist z.B. eine eingehende Nachricht von dem Kommunikationssystem 12, z.B. eine SMS (Short Message Service), die automatisch nach dem Empfang zur Anzeige gebracht und als ausgewähltes Objekt 15B dargestellt wurde.

In der Figur 3C ist eine zweiphasige Geste dargestellt, die in einer Berührzone 19A - 19D der berührungsempfindlichen Oberfläche auf dem Lenkrad 2 begonnen wird und frei im Raum fortgesetzt wird. In der ersten Phase wird dabei die Berührzone 19B als der Startpunkt der Geste ermittelt. Der Fahrer des Fahrzeugs 1 wischt z.B. mit seinem Zeigefinger über die entsprechende Stelle am Lenkradkranz radial nach außen.

Zu diesem Zeitpunkt wird auf dem Display 4 eine graphische Liste mit vier Einträgen dargestellt. Das Display 4 wird in vier Bedienzeilen 20A - 20D unterteilt und die graphischen Objekte 15A - 15D in der graphischen Liste werden den jeweiligen Bedienzeilen 20A - 20D zugeordnet, wie dies in der Figur 4C dargestellt ist. In Abhängigkeit von der ermittelten Berührzone 19B wird dann die Bedienzeile 20B und damit das graphische Objekt 15B zur Interaktion ausgewählt.

Die zweite Phase der in der Figur 3C dargestellten Geste umfasst eine Wischgeste, die wiederum von der Kamera 3 erfasst wird und deren Bewegungsrichtung B von der Auswerteeinheit 9 berechnet wird. In Abhängigkeit von der berechneten Bewegungsrichtung B wird sodann das zuvor ausgewählte graphische Objekt 15B verschoben und ist als verschobenes Objekt 15B' dargestellt. Die Wischgeste kann dabei derart durchgeführt werden, dass der Fahrer seine Hand 14 am Lenkrad 2 lässt und nur den Zeigefinger von links nach rechts auslenkt. Alternativ kann der Fahrer die Geste auch derart ausführen, dass er die zweite Phase als Freihandgeste im Raum neben dem Lenkrad 2 durchführt.

Mit Bezug zu den Figuren 3D und 4D ist eine weitere Gestenbedienung eines zur Interaktion vorgesehenen graphischen Objekts 15B dargestellt. Das graphische Objekt 15B wurde zuvor auf beliebige Art ausgewählt. Es wurde z.B. systemseitig aufgrund des Bedienkontexts ausgewählt und visuell hervorgehoben. Der Nutzer führt eine Greifgeste durch, die von der Kamera 3 erfasst wird und dem bereits ausgewählten graphischen Objekt 15B zugeordnet wird. Bei der Durchführung der Greifgeste bewegt der Nutzer seine Hand 14 gemäß einer Wegwerfgeste nach rechts, sodass die Auswerteeinheit 9 eine Bewegungsrichtung B extrahiert. Der kombinierten Greif- und Wegwerfgeste ist eine Interaktion zugeordnet, dass das entsprechend ausgewählte graphische Objekt 15B in einen anderen Teil des Anzeigebereichs zu verschieben ist. Im gezeigten Falle wird das graphische Objekt 15B vom Display 4 verschoben bzw. kopiert. Es wird z.B. als Anzeigeobjekt 15B' in Kopie auf dem Zusatzdisplay 5 oder dem Display 7 des mitgebrachten Infotainmentgeräts 6 angezeigt.

Im gezeigten Fall handelt sich z.B. um eine Mediendatei, z.B. ein Musik- oder Videoclip, den der Fahrer des Fahrzeugs 1 einem anderen Fahrgast auf eine dem Sitzplatz des Fahrgastes zugeordnete Medienwiedergabeeinrichtung verteilen kann. Auf diese Weise kann beispielsweise das Unterhaltungsprogramm auf den Rücksitzen des Fahrzeugs 1 gesteuert werden. Beim Verschieben des graphischen Objekts 15B auf ein Display 7 eines mitgebrachten Infotainmentgeräts 6 erzeugt die Steuereinheit 8 beim Erfassen der kombinierten Greif- und Wegwerf- bzw. Verschiebegeste ein Steuersignal, welches die Datenübertragung des datentechnisch gespeicherten graphischen Objekts 15B über die Funkverbindung 11 initiiert.

### Bezugszeichenliste

- 1: Fahrzeug
- 2: Lenkrad
- 3: Kamera
- 4: Multifunktionsdisplay im Cockpit
- 5: Zusatzdisplay im Cockpit
- 6: tragbares Infotainmentgerät
- 7: Display des Infotainmentgeräts
- 8: Steuereinheit
- 9: Auswerteeinheit
- 10: Datenbus im Fahrzeug
- 11: Funkschnittstelle
- 12: Funktionseinrichtungen im Fahrzeug
- 13: Detektionsraum
- 14: Hand des Nutzers
- 15A - 15F: graphische Objekte
- 16: Cursor
- 17: Zeigepunkt
- 18: Umgebungsbereich
- 19A - 19D: Berührzonen
- 20A - 20D: Bedienzeilen
- B: Bewegungsrichtung
- Z: Zeigerichtung

## Patentansprüche

1. Verfahren zum Bereitstellen einer Nutzerschnittstelle, insbesondere in einem Fahrzeug (1), bei dem
- zumindest ein zur Interaktion vorgesehenes graphisches Objekt (15A - 15F) in einem Anzeigebereich (4, 5, 7) außerhalb der Reichweite des Nutzers dargestellt wird,
- in einem von dem Anzeigebereich (4, 5, 7) räumlich getrennten Detektionsraum (13) eine Geste eines Nutzers erfasst wird,
- das graphische Objekt (15B) zur Interaktion ausgewählt wird und
- eine der Geste zugeordnete Interaktion mit dem ausgewählten graphischen Objekt (15B) durchgeführt wird,
- wobei die Position oder Positionen, die das ausgewählte graphische Objekt (15B) während der Interaktion einnimmt, außerhalb der Reichweite des Nutzers liegt/liegen,
**dadurch gekennzeichnet, dass**
- eine erste Phase der Geste auf einer berührungsempfindlichen Oberfläche (2) in Reichweite des Nutzers erfasst wird und
- eine zweite Phase der Geste berührungslos im Raum erfasst wird,
- wobei die Trajektorien der ersten und zweiten Phase der Geste miteinander verbunden sind.

2. Verfahren nach Anspruch 1,
**dadurch gekennzeichnet, dass**
- in der ersten Phase der Geste eine Berührzone (19B) in Abhängigkeit von der Geste auf der berührungsempfindlichen Oberfläche (2) ermittelt wird und
- die Auswahl des Objekts (15B) in Abhängigkeit von der ermittelten Berührzone (19B) auf der berührungsempfindlichen Oberfläche (2) erfolgt.

3. Verfahren nach Anspruch 1 oder 2,
**dadurch gekennzeichnet,**
**dass** die berührungsempfindliche Oberfläche (2) eine vom Anzeigebereich (4, 5, 7) beabstandete Oberfläche (2) in der Reichweite des Fahrers des Fahrzeugs (1), vorzugsweise auf dem Lenkrad (2), umfasst.

4. Verfahren nach Anspruch einem der vorangegangenen Ansprüche,
**dadurch gekennzeichnet, dass**
- ein Auswahlzeiger (16) in dem Anzeigebereich (4, 5, 7) angezeigt wird,
- aus der Geste eine relative Bewegung (B) extrahiert wird,
- die Position des Auswahlzeigers in dem Anzeigebereich (4, 5, 7) in Abhängigkeit von der extrahierten relativen Bewegung (B) der Geste verändert wird und
- das graphische Objekt (15B) in Abhängigkeit von der Position des Auswahlzeigers (16) ausgewählt wird.

5. Verfahren nach einem der vorangegangenen Ansprüche,
**dadurch gekennzeichnet, dass**
- aus der erfassten Geste eine Richtung (Z) im Raum ermittelt wird,
- in Abhängigkeit von der ermittelten Richtung (Z) ein Punkt (17) in dem Anzeigebereich (4, 5, 7) berechnet wird und
- die Auswahl des graphischen Objekts (15B) visualisiert wird, wenn das graphische Objekt (15B) in einem vorbestimmten Umgebungsbereich (18) um den berechneten Punkt (17) liegt.

6. Verfahren nach einem der vorangegangenen Ansprüche,
**dadurch gekennzeichnet,**
**dass** die Position des ausgewählten graphischen Objekts (15B) im Anzeigebereich (4, 5, 7) in Abhängigkeit von der relativen Bewegung (B) der Geste verändert wird.

7. Verfahren nach Anspruch 6,
**dadurch gekennzeichnet, dass**
- der Anzeigebereich (4, 5, 7) wenigstens eine erste und eine zweite Anzeigefläche (4; 5; 7) umfasst, die räumlich voneinander getrennt sind, und
- durch die Geste das ausgewählte graphische Objekt (15B) von der ersten Anzeigefläche (4) auf die zweite Anzeigefläche (5; 7) verschoben wird.

8. Verfahren nach Anspruch 7,
- **dadurch gekennzeichnet,**
- **dass** die erste und/oder zweite Anzeigefläche (7) auf einem, lösbar mit dem Fahrzeug (1) verbundenen Gerät (6), insbesondere einem tragbaren Gerät, angeordnet ist.

9. Anordnung (2, 3, 4, 5, 8, 9, 10) zum Bereitstellen einer Nutzerschnittstelle, insbesondere in einem Fahrzeug (1), umfassend
- eine Schnittstelle (10) zum Empfangen von datentechnisch gespeicherten, zur Interaktion vorgesehenen graphischen Objekten (15A - 15F),
- eine Anzeigefläche (4, 5, 7) zum Darstellen von zur Interaktion vorgesehener graphischer Objekte (15A - 15F) in einem Anzeigebereich (4, 5, 7),
- eine Gestenerfassungseinrichtung (3, 9), zum Erfassen von Gesten eines Nutzers in einem Detektionsraum (13), wobei der Detektionsraum (13) durch die Reichweite des innerhalb eines fest vorgegebenen Nutzerbereichs eingeschränkten Nutzers bestimmt ist,
- eine Steuereinheit (8), welche mit der Schnittstelle (10), der Anzeigefläche (4, 5, 7) und der Gestenerfassungseinrichtung (3, 9) verbunden ist und mittels derer Signale zum Auswählen graphischer Objekte (15A - 15F) empfangbar sind und mittels derer den Gesten zugeordnete Interaktionen mit dem ausgewählten graphischen Objekt (15B) steuerbar sind,
- wobei mittels der Steuereinheit (8) das zur Interaktion vorgesehene graphische Objekt (15B) in einem Anzeigebereich (4, 5, 7) außerhalb der Reichweite des Nutzers darstellbar ist, der Detektionsraum (13) vom Anzeigebereich (4, 5, 7) räumlich getrennt ist und die Interaktion derart ausführbar ist, dass die Position oder Positionen, die das ausgewählte graphische Objekt (15B) während der Interaktion einnimmt, außerhalb der Reichweite des Nutzers liegt/ liegen,
**dadurch gekennzeichnet,**
- **dass** die Gestenerfassungseinrichtung (3, 9) resistive und/oder kapazitive Flächen, über welche eine erste Phase der Geste erfassbar ist, und ein Kamerasystem umfasst, über welches eine zweite Phase der Geste berührungslos im Raum erfassbar ist, wobei die Trajektorien der ersten und zweiten Phase der Geste miteinander verbunden sind.

## Claims

1. Method for providing a user interface, in particular in a vehicle (1), in which
- at least one graphical object (15A-15F) provided for interaction is displayed in a display area (4, 5, 7) outside the user's reach,
- a user's gesture is detected in a detection space (13) which is spatially separate from the display area (4, 5, 7),
- the graphical object (15B) is selected for interaction, and
- an interaction associated with the gesture is carried out using the selected graphical object (15B),
- the position(s) adopted by the selected graphical object (15B) during interaction being outside the user's reach,
**characterized in that**
- a first phase of the gesture is detected on a touch-sensitive surface (2) in the user's reach, and
- a second phase of the gesture is contactlessly detected in space,
- the trajectories of the first and second phases of the gesture being associated with one another.

2. Method according to Claim 1, **characterized in that**
- in the first phase of the gesture, a contact zone (19B) is determined on the basis of the gesture on the touch-sensitive surface (2), and
- the object (15B) is selected on the basis of the determined contact zone (19B) on the touch-sensitive surface (2).

3. Method according to Claim 1 or 2, **characterized in that** the touch-sensitive surface (2) comprises a surface (2) at a distance from the display area (4, 5, 7) in the reach of the driver of the vehicle (1), preferably on the steering wheel (2).

4. Method according to one of the preceding claims, **characterized in that**
- a selection pointer (16) is displayed in the display area (4, 5, 7),
- a relative movement (B) is extracted from the gesture,
- the position of the selection pointer in the display area (4, 5, 7) is changed on the basis of the extracted relative movement (B) of the gesture, and
- the graphical object (15B) is selected on the basis of the position of the selection pointer (16).

5. Method according to one of the preceding claims, **characterized in that**
- a direction (Z) in space is determined from the detected gesture,
- a point (17) in the display area (4, 5, 7) is calculated on the basis of the determined direction (Z), and
- the selection of the graphical object (15B) is visualized if the graphical object (15B) is in a predetermined area (18) surrounding the calculated point (17).

6. Method according to one of the preceding claims, **characterized in that** the position of the selected graphical object (15B) in the display area (4, 5, 7) is changed on the basis of the relative movement (B) of the gesture.

7. Method according to Claim 6, **characterized in that**
- the display area (4, 5, 7) comprises at least one first display surface and one second display surface (4; 5; 7) which are spatially separate from one another, and
- as a result of the gesture, the selected graphical object (15B) is moved from the first display surface (4) to the second display surface (5; 7).

8. Method according to Claim 7,
- **characterized**
- **in that** the first and/or second display surface (7) is/are arranged on a device (6) which is releasably connected to the vehicle (1), in particular a portable device.

9. Array (2, 3, 4, 5, 8, 9, 10) for providing a user interface, in particular in a vehicle (1), comprising
- an interface (10) for receiving graphical objects (15A-15F) which are stored using data technology and are provided for interaction,
- a display surface (4, 5, 7) for displaying graphical objects (15A-15F) provided for interaction in a display area (4, 5, 7),
- a gesture detection device (3, 9) for detecting a user's gestures in a detection space (13), the detection space (13) being determined by the reach of the user restricted within a firmly predefined user area,
- a control unit (8) which is connected to the interface (10), to the display surface (4, 5, 7) and to the gesture detection device (3, 9) and can be used to receive signals for selecting graphical objects (15A-15F) and can be used to control interactions with the selected graphical object (15B) which are associated with the gestures,
- wherein, by means of the control unit (8), the graphical object (15B) provided for interaction can be displayed in a display area (4, 5, 7) outside the user's reach, the detection space (13) is spatially separate from the display area (4, 5, 7), and the interaction can be carried out in such a manner that the position(s) adopted by the selected graphical object (15B) during interaction is/are outside the user's reach,
**characterized**
- **in that** the gesture detection device (3, 9) comprises resistive and/or capacitive surfaces which can be used to detect a first phase of the gesture and a camera system which can be used to detect a second phase of the gesture contactlessly in space, the trajectories of the first and second phases of the gesture being associated with one another.

## Revendications

1. Procédé de fourniture d'une interface utilisateur, notamment dans un véhicule (1), selon lequel
- au moins un objet graphique (15A -15F) destiné à une interaction est représenté dans une zone d'affichage (4, 5, 7) en-dehors de la portée de l'utilisateur,
- un geste de l'utilisateur est détecté dans un espace de détection (13) séparé spatialement de la zone d'affichage (4, 5, 7),
- l'objet graphique (15B) est sélectionné pour l'interaction et
- une interaction associée au geste avec l'objet graphique (15B) sélectionné est exécutée,
- la position ou les positions qu'adopte l'objet graphique (15B) pendant l'interaction se trouve(nt) en-dehors de la portée de l'utilisateur,
**caractérisé en ce que**
- une première phase du geste est détectée sur une surface tactile (2) à portée de l'utilisateur et
- une deuxième phase du geste est détectée sans contact dans l'espace,
- les trajectoires de la première et de la deuxième phase du geste étant reliées entre elles.

2. Procédé selon la revendication 1, **caractérisé en ce que**
- dans la première phase du geste, une zone de toucher (19B) est déterminée en fonction du geste sur la surface tactile (2) et
- la sélection de l'objet (15B) s'effectue en fonction de la zone de toucher (19B) déterminée sur la surface tactile (2).

3. Procédé selon la revendication 1 ou 2, **caractérisé en ce que** la surface tactile (2) comporte une surface (2) espacée de la zone d'affichage (4, 5, 7) à portée du conducteur du véhicule (1), de préférence sur le volant de direction (2).

4. Procédé selon l'une des revendications précédentes, **caractérisé en ce que**
- un pointeur de sélection (16) est affiché dans la zone d'affichage (4, 5, 7),
- un mouvement relatif (B) est extrait du geste,
- la position du pointeur de sélection dans la zone d'affichage (4, 5, 7) est modifiée en fonction du mouvement relatif (B) extrait du geste et
- l'objet graphique (15B) est sélectionné en fonction de la position du pointeur de sélection (16).

5. Procédé selon l'une des revendications précédentes, **caractérisé en ce que**
- une direction (Z) dans l'espace est déterminée à partir du geste détecté,
- un point (17) dans la zone d'affichage (4, 5, 7) est calculé en fonction de la direction (Z) déterminée et
- la sélection de l'objet graphique (15B) est visualisée lorsque l'objet graphique (15B) se trouve dans une zone d'environnement (18) prédéterminée autour du point (17) calculé.

6. Procédé selon l'une des revendications précédentes, **caractérisé en ce que** la position de l'objet graphique (15B) sélectionné dans la zone d'affichage (4, 5, 7) est modifiée en fonction du mouvement relatif (B) du geste.

7. Procédé selon la revendication 6, **caractérisé en ce que**
- la zone d'affichage (4, 5, 7) comporte au moins une première et une deuxième surface d'affichage (4 ; 5 ; 7) qui sont séparées les unes des autres dans l'espace et
- l'objet graphique (15B) est déplacé par le geste de la première surface d'affichage (4) sur la deuxième surface d'affichage (5 ; 7).

8. Procédé selon la revendication 7, **caractérisé en ce que**
- la première et/ou la deuxième surface d'affichage (7) est disposée sur un appareil (6) relié de manière amovible avec le véhicule (1), notamment un appareil portable.

9. Arrangement (2, 3, 4, 5, 8, 9, 10) de fourniture d'une interface utilisateur, notamment dans un véhicule (1), comprenant
- une interface (10) destinée à recevoir des objets graphiques (15A -15F) destinés à une interaction enregistrés sous forme informatique,
- une surface d'affichage (4, 5, 7) destinée à représenter les objets graphiques (15A -15F) destinés à une interaction dans une zone d'affichage (4, 5, 7),
- un dispositif de détection de geste (3, 9) destiné à détecter les gestes d'un utilisateur dans un espace de détection (13), l'espace de détection (13) étant déterminé par la portée d'un utilisateur limité à l'intérieur d'une zone d'utilisateur prédéfinie fixe,
- une unité de commande (8) qui est reliée à l'interface (10), à la surface d'affichage (4, 5, 7) et au dispositif de détection de geste (3, 9) et au moyen de laquelle peuvent être reçus des signaux destinés à sélectionner des objets graphiques (15A -15F) et au moyen de laquelle les interactions associées aux gestes peuvent être commandées avec l'objet graphique (15B) sélectionné,
- l'objet graphique (15B) destiné à l'interaction pouvant être représenté au moyen de l'unité de commande (8) dans une zone d'affichage (4, 5, 7) en-dehors de la portée de l'utilisateur, l'espace de détection (13) étant séparé spatialement de la zone d'affichage (4, 5, 7) et l'interaction pouvant être exécutée de telle sorte que la position ou les positions qu'adopte l'objet graphique (15B) pendant l'interaction se trouve(nt) en-dehors de la portée de l'utilisateur,
**caractérisé en ce que**
- le dispositif de détection de geste (3, 9) comporte des surfaces résistives et/ou capacitives, par le biais desquelles peut être détectée une première phase du geste, ainsi qu'un système de caméra, par le biais duquel une deuxième phase du geste peut être détectée sans contact dans l'espace, les trajectoires de la première et de la deuxième phase du geste étant reliées entre elles.
